# EUROPEAN PATENT SPECIFICATION

(11) **EP 0 416 274 B1**
(45) Date of publication and mention of the grant of the patent: **30.03.1994**
(21) Application number: 90114513.6
(22) Date of filing: 27.07.1990
(51) Int. Cl.: H01G 9/08

(54) **Electrical double-layer capacitor**
Elektrischer Doppelschichtkondensator
Condensateur électrique à double couche

(30) Priority: 02.09.1989 JP 227779/89
(43) Date of publication of application: 13.03.1991
(73) Proprietor: Isuzu Motors Limited, Shinagawa-ku, Tokyo 140 (JP)
(72) Inventor: Kurabayashi, Ken, Chigasaki-shi, Kanagawa (JP); Tsuchiya, Yoshinobu, Fujisawa-shi, Kanagawa (JP); Moroboshi, Hiroyoshi, Yokohama-shi, Kanagawa (JP)
(74) Representative: Winter, Konrad Theodor, Dipl.-Ing.

(56) References cited:
- GB-A- 2 139 813

## Description

The present invention relates to an electrical double-layer capacitor wherein several cells are connected in an arbitrary connection relation without making them form a high bulky assembly.

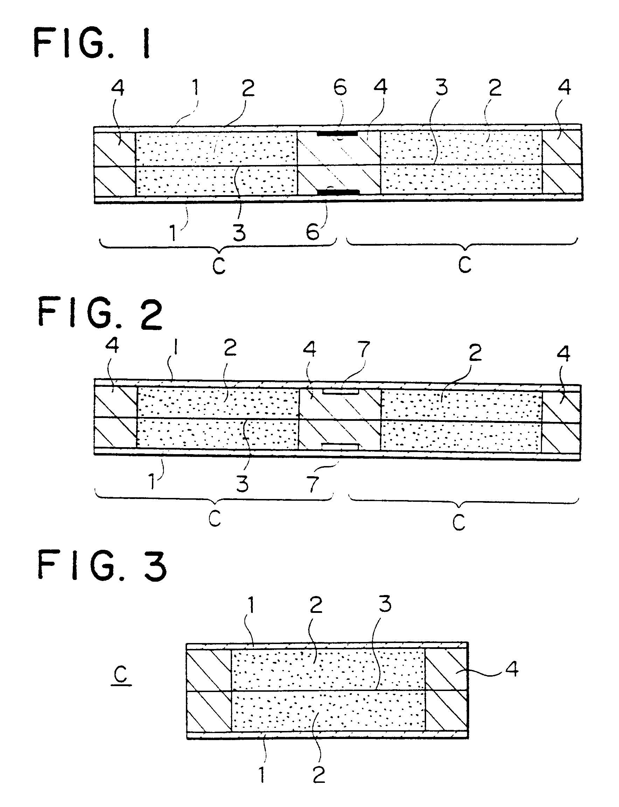

In Fig.3 is shown a conventional electrical capacitor cell. In Fig.3, numeral 1 denotes a collecting electrode, 2 polarising electrodes, 3 a separator, 4 a gasket, and C a cell.

As the collecting electrode 1 is used, for example, a conductive rubber sheet, and as the gasket 4 is used, for example, a non-conductive rubber. Also, as the separator 3 is used, for example, a polyethylene porous film.

The polarising electrode 2 is made of active carbon powder formed into a paste-like matter and impregnated with an electrolytic liquid (for example, dilute sulfuric acid). (By the way, as the polarising electrode of an electrical double-layer capacitor cell, there is known a type which is brought into solid plate-like form by sintering active carbon powder, with an electrolytic liquid having been impregnated thereinto).

The gasket 4 is made in a tube-like form, and approximately at the central part of its inside, there is arranged a separator 3 in such a manner as to delimit up and down parts. And a polarising electrode 2 is filled over and under the separator 3, and a collecting electrode 1 is provided in such a manner as to cover the polarising electrode 2 and the gasket 4.

The gasket 4 is adhered to the collecting electrode 1 and the separator 3, and the collecting electrode 1 is contacted to the surface of the polarising electrode 2. The above-described adhesion is carried out by use of an adhesive agent or by heat melting.

The breakdown voltage of the cell C formed in such a manner as described above is less than several V. Therefore, in the case when it is used in an application requiring higher breakdown voltage, a number of cells C must be connected in series. Also, when the capacity is deficient, a number of cells C must be connected in parallel.

Hitherto, in relation to the technology for connecting a plural number of cells, there are proposed 1) a method in which the collecting electrodes at the part where they become doubled at the time of laminating is laminated as a single layer (Japanese Patent Application Laid-Open No. 97770/1979), 2) a method of connecting cells in series by use of a conductive plate for carrying the polarising electrodes of the neighbouring cells in common (Japanese Patent Application Laid-Open No. 162218/1980), 3) a method for constituting a predetermined plural number of cells (for example, 4 pieces) in one body in a connecting relation previously determined (Japanese Patent Application Laid-Open No. 194417/1984).

However, in the above-described respective technologies, there are some problems as described in the following.

At first, in the method in which cells are laminated to be connected in series such as in the case of Japanese Patent Application Laid-Open No. 97770/1979, the whole shape of the product becomes highly bulky. Therefore, although it will do in the case when the space given for setting the capacitor cell is sufficient, but in another case, it is unable to be used.

In the method according to the Japanese Patent Application Laid-Open No. 162218/1980, there is the problem that a number of conductive plates are required in accordance with the increase of the number of pieces in series, and that, further, it becomes troublesome to effect the connection between respective cells and to effect the leading out of terminals.

Also, in the method of the Japanese Patent Application Laid-Open No. 194417/1984, the connecting relation has been previously determined in the time of production, and it is impossible after completion of production to use it by changing to an arbitrary connecting relation, and, moreover, many pieces are required and the price becomes expensive.

The present invention has the object of solving such problems as described above.

GB-A 2 139 813 discloses an electrical double-layer capacitor according to the preamble of the claim. This document shows embodiments having gaskets which are directly overlaid by sheets contacting neighboring capacitor cells.

The first object of the present invention is to obtain an electrical double-layer capacitor cell having high breakdown voltage without making the whole shape bulky, but having a desired large capacity.

The second object of the present invention is to obtain an electrical double-layer capacitor in which the procedure for achieving a desired connecting relation of the cells can be carried out by a simple procedure such as merely cutting off a part of the collecting electrode without requiring peculiar parts or a troublesome connecting procedure.

In order to attain the objects as described above, in the present invention, an electrical double-layer capacitor is provided comprising the features of the claim.

According to the invention, the collecting electrodes are made of common sheets wherein the part positioned in the boundary part between the cells can easily be cut off.

Also, in one alternative of the present invention, an insulating thin film for preventing the adhesion of the collecting electrode and the gasket as one constitutional element of the cell is provided directly under the part of the collecting electrode positioned in the boundary part between the cells.

Also, in another alternative of the present invention, a vacancy for preventing the adhesion of the collecting electrode and the gasket as one constitutional element of the cell is provided directly under the part of the collecting electrode positioned in the boundary part between the cells.

These and other objects of the present invention will become more apparent from the detailed description and examples which follow.
Fig.1 is a diagram showing the electrical double-layer capacitor cell according to a first embodiment of the present invention;
Fig.2 is a diagram showing the electrical double-layer capacitor cell according to a second embodiment of the present invention;
Fig.3 is a diagram showing a conventional electrical double-layer capacitor cell;
Fig.4 is a decomposed perspective diagram of the first embodiment; and
Fig.5 is a perspective diagram at the time of finalization of the first embodiment.

In the following, embodiments of the present invention will be explained in detail by reference to the drawings.

In Fig.1, an electrical double-layer capacitor according to a first embodiment of the present invention is shown. Symbols correspond to those of Fig.3, and numeral 6 denotes an insulating thin film.

In the present invention, although a plurality (two pieces in Fig.1) of cells C are constituted by using a collecting electrode in common, in the case of adhering the collecting electrode 1 to gasket 4, at approximately in the central part of the surface of the gasket 4 other than the gaskets at both terminals, an insulating thin film 6 is intervened. And in the part where the insulating thin film has been intervened, the collecting electrode 1 and the gasket 4 do not adhere.

For example, in the case when adherence is carried out by heat melting, paper, Teflon® sheet, or a plastic sheet which is not heat meltable, etc. is used as the insulating thin film 6, and this is previously pasted on the gasket 4, and the collecting electrode 1 is put thereon and heat melted. By operating in such a manner as described above, the part where the collecting electrode 1 and the insulating thin film 6 of the gasket 4 are put between is not heat melted.

Also, in the case when the adhesion is carried out by use of an adhesive agent, the adhesive agent is not coated on the insulating thin film 6 pasted on the gasket 4. In such a manner, the part putting the collecting electrode 1 and the insulating thin film 6 of the gasket 4 therebetween is also inhibited from adhering.

By the way, although in the above-described example, it has been assumed that the insulating thin film 6 is previously pasted on the gasket 4, it may also be pasted on the collecting electrode 1.

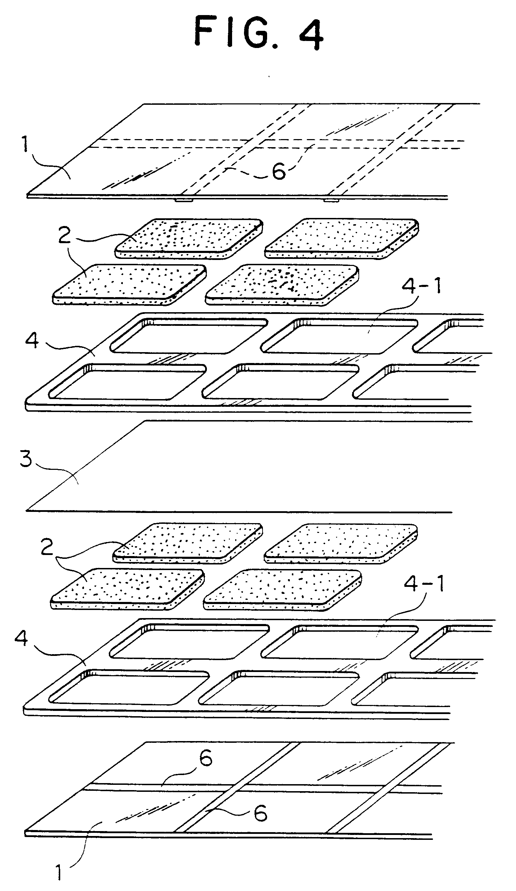

In Fig.4 is shown a decomposed perspective view of the first embodiment. Symbols correspond to those of Fig.1, and 4-1 denotes an open port part for filling provided in the gasket 4 in order to fill the polarising electrode 2. At a predetermined position of the collecting electrode 1, there is pasted an insulating thin film 6, and in the open port part for filling 4-1, there is filled polarising electrode 2. The polarising electrode 2 may be a paste-like one, or a solid plate-like one.

The whole shape of the capacitor produced in such a manner as described above is flat and plate-like and has the thickness of one piece of cell, and is not bulky. Also, all respective cells are initially connected in parallel with a common collecting electrode 1. In order to use this as a capacitor cell having desired breakdown voltage and capacity, it is treated as follows.

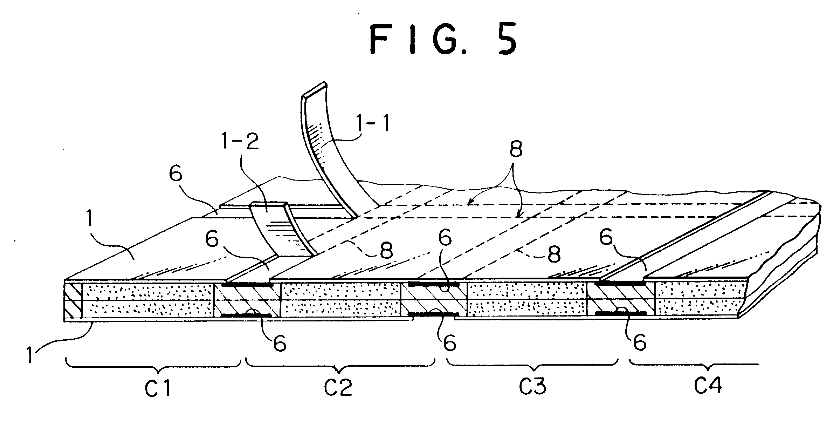

In Fig.5 is shown a perspective view of the first embodiment at the time of finalization. Symbols correspond to those of Fig.1, and numeral 1-1 and 1-2 denote collecting electrode pieces, 8 a mark line, C1 to C4 are depicted on the exterior surface in such a manner as to let the position where the insulating thin film 6 is intervened be discernible from outside.

The collecting electrode 1 present at the position where the insulating thin film 6 has been intervened is cut off in such a manner as is shown in the figure, and when the collecting electrode pieces 1-1 and 1-2 which are in the way of being cut off, and the collecting electrode piece (not shown in the figure) at the underside present at the position directly below the collecting electrode piece 1-1 are cut off along the mark line 8 and when the collecting electrode piece at the underside between the cells C2 and C3 is cut off, all cells C-1 to C-4 become series connection. The collecting electrodes 1 placed between the cells are playing the role of a conductor for connection between the cells.

If it is assumed that the collecting electrode piece 1-1 is cut off, and the collecting electrode piece 1-2 is not cut off, a parallel connected body of the cells C-1 and C-2 becomes to be connected in series to the cell C-3.

Also, in the case when the collecting electrode piece 1-1 and the collecting electrode of the underside present at the position directly below the collecting electrode piece 1-1 only have been cut off, the cells C-1 to C-4 are parallely connected.

In such a manner as described above, by only performing such a simple procedure as suitably cutting off the collecting electrode 1 along the mark line 8, it becomes possible to connect cells arbitrarily in series or parallel to form a capacitor cell having desired breakdown voltage and capacity.

The reason why the insulating thin film 6 has been intervened is that the adhesion of the collecting electrode 1 to the gasket 4 is prevented in order to make the cutting off of the collecting electrode 1 to be easily effected.

By the way, in order to make the cutting off of the collecting electrode more easily to be effected, the mark line 8 may be replaced with sewing machine needle holes. However, since the mark line 8 has only such an object as to be the yardstick of cutting off, it is not necessary.

In Fig.2 is shown an electrical double-layer capacitor according to a second embodiment of the present invention. Symbols correspond to those of Fig.1 and numeral 7 denotes a ditch.

The second embodiment can be said to be a modified example of the first embodiment, and there is only the difference that, in place of the intervening of the insulating thin film 6, a ditch 7 is provided on the surface of the gasket 4.

In the ditch 7, since the collecting electrode 1 and the gasket 4 are separated for the depth thereof, the adhesion of the collecting electrode 1 and the gasket 4 at this part is prevented. By the way, this embodiment is possible in the case when the thickness of the gasket 4 is large.

## Claims

1. An electrical double-layer capacitor comprising several cells (C) which are arranged side by side and have collecting electrodes (1) formed by common sheets contacting the polarizing electrodes (2) of said capacitor as well as gaskets (4) surrounding the polarizing electrodes (2) of each cell (C) and separating the cells (C), characterized in that thin insulating films (6) or gaps (7) for preventing the adhesion of the collecting electrodes (1) to the gaskets (4) are provided directly under the collecting electrodes (1) and are positioned in the boundary part between cells (C).

## Patentansprüche

1. Elektrischer Doppelschichtkondensator mit mehreren Zellen (C), die Seite an Seite angeordnet sind und Sammelelektroden (1) haben, die durch gemeinsame Blätter gebildet sind, die die Polarisationselektroden (2) des Kondensators sowie Dichtungen (4) kontaktieren, die die Polarisationselektroden (2) jeder Zelle (C) umgeben und die Zellen (C) trennen, dadurch gekennzeichnet, daß dünne isolierende Filme (6) oder Spalte (7) zum Verhindern der Adhäsion der Sammelelektroden (1) an den Dichtungen (4) direkt unterhalb der Sammelelektroden (1) vorgesehen und in dem Grenzbereich zwischen Zellen (C) angeordnet sind.

## Revendications

1. Condensateur électrique à double couche comprenant plusieurs cellules (C) qui sont disposées côte à côte et ont des électrodes collectrices (1) formées par des feuilles communes en contact avec les électrodes polarisantes (2) dudit condensateur, ainsi que des joints (4) entourant les électrodes polarisantes (2) de chaque cellule (C) et séparant les cellules (C), caractérisé en ce que des films minces isolants (6) ou des vides (7) pour empêcher l'adhésion des électrodes collectrices (1) aux joints (4) sont prévus directement sous les électrodes collectrices (1) et disposés dans la zone frontière entre cellules (C).
